# DEMANDE DE BREVET EUROPEEN

(11) **EP 4 044 700 A1**
(43) Date de publication de la demande: **17.08.2022**
(21) Numéro de dépôt: 22156449.5
(22) Date de dépôt: 11.02.2022
(51) Int. Cl.: H04W 56/00, H04N 21/43

(54) **PROCEDE DE SYNCHRONISATION D'EQUIPEMENTS AUDIO**

(30) Priorité: 15.02.2021 FR 2101437
(71) Demandeur: SAGEMCOM BROADBAND SAS, 92500 Rueil-Malmaison (FR)
(72) Inventeur: CHATELET, Antoine, 92500 Rueil Malmaison (FR); ROUHART, Guillaume, 92500 Rueil Malmaison (FR)
(74) Mandataire: Lavaud, Thomas

(57) **Abrégé**

Procédé de synchronisation, mis en œuvre pour un premier équipement audio (la) connecté via un premier point radio (9a) identifié par un premier BSSID à un réseau sans fil (8), comprenant les étapes de :
- détecter un deuxième équipement audio (1b) connecté au même réseau sans fil (8) et appartenant au même groupe audio ;
- acquérir un deuxième BSSID d'un deuxième point radio (9b) via lequel le deuxième équipement audio (1b) est connecté au réseau sans fil (8), puis déterminer si le premier BSSID et le deuxième BSSID sont identiques ;
- si ce n'est pas le cas, mettre en œuvre une phase de sélection pour sélectionner un point radio optimisé identifié par un BSSID optimisé ;
- si le BSSID optimisé est différent du premier BSSID, connecter le premier équipement audio (la) au réseau sans fil (8) via le point radio optimisé.

## Description

L'invention concerne le domaine des équipements audio connectés pouvant être regroupés pour restituer un flux sonore de manière synchronisée.

### ARRIERE PLAN DE L'INVENTION

Il existe aujourd'hui de nombreux et variés équipements électroniques qui sont capables de restituer un flux sonore sur une ou plusieurs voies audio. Chacun de ces équipements électroniques comporte classiquement un ou plusieurs haut-parleurs et des composants électroniques et logiciels qui acquièrent, traitent et transmettent les signaux audio aux haut-parleurs.

On parlera ici d' « équipements audio » pour désigner de tels équipements électroniques.

Chacun de ces équipements audio intègre aussi classiquement une interface LAN (pour *Local Area Network*) qui permet auxdits équipements audio de se connecter à un réseau LAN. La technologie utilisée par l'interface LAN est typiquement une technologie WiFi ou une technologie Ethernet.

Parmi ces équipements audio, on trouve bien sûr des enceintes connectées, des barres de son, des assistants vocaux, mais aussi des télévisions, des boîtiers décodeurs, etc.

Certains de ces équipements audio peuvent être associés et configurés pour améliorer l'expérience acoustique de l'utilisateur, ou bien pour fournir de nouvelles fonctionnalités.

Il est ainsi possible de regrouper plusieurs équipements audio au sein d'un même groupe audio pour restituer simultanément un même flux sonore global. Les équipements audio peuvent être regroupés par paire (stéréo) ou bien former un système audio multicanaux (au format 5.1 par exemple).

Parmi les nouvelles fonctionnalités, on trouve la fonction de *multiroom* (que l'on traduit parfois par « multi-pièces »), qui permet de définir différents groupes audio (ou zones) comportant chacun un ou plusieurs équipements audio, et de synchroniser la restitution sonore entre ces différents groupes audio.

Lorsque ces fonctions sont mises en œuvre, chaque équipement audio du groupe audio restitue un flux sonore particulier qui appartient au flux sonore global restitué par le groupe audio. Il est fondamental que la restitution des différents flux sonores particuliers soit parfaitement synchronisée, de manière à éviter tout décalage temporel dans la restitution qui pourrait dégrader le rendu sonore.

Une première solution pour assurer cette synchronisation consiste à intégrer dans chaque équipement audio un système d'horloge très précis, avec une dérive très faible. Cependant, de tels systèmes d'horloge sont onéreux. Cette première solution requiert par ailleurs que tous les équipements audio du groupe audio soient munis du système d'horloge en question, ce qui représente une contrainte importante pour l'utilisateur.

Une deuxième solution consiste à transmettre à chaque équipement audio du groupe audio une horloge de référence commune pour réaliser une restitution sonore synchronisée.

Il a été envisagé, pour obtenir cette référence commune, d'utiliser la fonction de synchronisation temporelle du point d'accès WiFi (on parle généralement de TSF, pour *Time Synchronization Function*)*.* Les informations de TSF sont diffusées à intervalles réguliers par le point d'accès WiFi à tous les clients connectés via des trames de type *BEACON.*

Généralement, l'utilisateur configure ses équipements audio pour qu'ils se connectent à un même réseau sans fil mis en œuvre dans son habitation et identifié par un SSID (pour « *Service Set IDentifier* »). L'installation par SSID est l'usage courant pour les équipements audio utilisant une interface sans fil, car elle est souple. L'équipement audio pourra se connecter sur un réseau maillé plus complexe (topologie *mesh*) et/ou avec extendeur de manière transparente et simple à appréhender pour l'utilisateur.

Chaque équipement audio, après avoir été configuré, accède alors au réseau sans fil en se connectant, de manière autonome, à la passerelle résidentielle de l'habitation ou bien éventuellement à un répéteur WiFi. Or, dans certaines configurations, et notamment lorsque des équipements audio sont connectés au réseau sans fil sur des bandes de fréquence différentes (par exemple 2,4GHz et 5GHz), ou bien lorsque certains équipements audio sont connectés à la passerelle résidentielle et d'autres à un répéteur WiFi, les sources de fonction de synchronisation temporelle sont différentes et ne peuvent par conséquent pas être utilisées pour synchroniser de manière précise les équipements audio du groupe audio.

### OBJET DE L'INVENTION

L'invention a pour objet d'obtenir une synchronisation très précise de la restitution sonore dans un groupe audio, de manière peu contraignante pour l'utilisateur et sans augmenter le coût des équipements audio formant le groupe audio.

### RESUME DE L'INVENTION

En vue de la réalisation de ce but, on propose un procédé de synchronisation, mis en œuvre pour un premier équipement audio connecté via un premier point radio identifié par un premier BSSID à un réseau sans fil identifié par un SSID, le premier équipement audio appartenant à un groupe audio, le procédé de synchronisation comprenant les étapes de :
- détecter un deuxième équipement audio connecté au même réseau sans fil et appartenant au même groupe audio ;
- acquérir un deuxième BSSID d'un deuxième point radio via lequel le deuxième équipement audio est connecté au réseau sans fil, puis déterminer si le premier BSSID et le deuxième BSSID sont identiques ;
- si ce n'est pas le cas, mettre en œuvre une phase de sélection pour sélectionner un point radio optimisé identifié par un BSSID optimisé ;
- si le BSSID optimisé est différent du premier BSSID, connecter le premier équipement audio au réseau sans fil via le point radio optimisé ;
- utiliser une fonction de synchronisation temporelle fournie par le point radio optimisé pour synchroniser une restitution réalisée par le premier équipement audio d'un premier flux sonore appartenant à un flux sonore global restitué par le groupe audio.

Le procédé de synchronisation selon l'invention permet donc de sélectionner un même point radio optimisé, identifié par un BSSID optimisé, sur lequel le premier équipement audio et le deuxième équipement audio peuvent se connecter pour accéder au réseau sans fil.

La connexion « forcée » sur le même point radio optimisé permet d'assurer que le premier équipement audio et le deuxième équipement audio utilisent la même source de fonction de synchronisation temporelle, qui leur permet de restituer le flux sonore global de manière parfaitement synchronisée, sans induire de décalage temporel dans la restitution.

La mise en œuvre du procédé de synchronisation selon l'invention est très peu coûteuse car elle ne nécessite pas de ressources matérielles particulières. Le procédé de synchronisation selon l'invention n'est aucunement contraignant pour l'utilisateur, puisqu'il peut être exécuté par le premier équipement audio (et le deuxième équipement audio) de manière autonome. Le procédé de synchronisation peut être mis en œuvre dans un groupe audio comprenant tout type d'équipements audio et pas nécessairement des équipements audio ayant des caractéristiques matérielles identiques, ce qui est très avantageux pour l'utilisateur.

On propose de plus un procédé de synchronisation tel que précédemment décrit, dans lequel un niveau de priorité distinct est attribué à chacun des premier équipement audio et deuxième équipement audio, et dans lequel, au cours de la phase de sélection, le point radio optimisé sélectionné est celui auquel est connecté le premier équipement audio ou le deuxième équipement audio dont le niveau de priorité est le plus élevé.

On propose de plus un procédé de synchronisation tel que précédemment décrit, dans lequel les niveaux de priorité sont représentatifs de rôles remplis dans le groupe audio par le premier équipement audio et le deuxième équipement audio.

On propose de plus un procédé de synchronisation tel que précédemment décrit, dans lequel plusieurs voies audio sont définies dans le groupe audio, et dans lequel chaque rôle correspond à une restitution de l'une des voies audio.

On propose de plus un procédé de synchronisation tel que précédemment décrit, dans lequel les niveaux de priorité sont définis à partir d'identifiants du premier équipement audio et du deuxième équipement audio.

On propose de plus un procédé de synchronisation tel que précédemment décrit, dans lequel les identifiants sont des numéros de série ou des adresses MAC.

On propose de plus un procédé de synchronisation tel que précédemment décrit, comprenant l'étape d'échanger des premières informations de connexion relatives à une connexion entre le premier équipement audio et le premier point radio et/ou le deuxième point radio, et des deuxièmes informations de connexion relatives à une connexion entre le deuxième équipement audio et le premier point radio et/ou le deuxième point radio, la phase de sélection comprenant l'étape de sélectionner le point radio optimisé à partir des premières informations de connexion et des deuxièmes informations de connexion.

On propose de plus un procédé de synchronisation tel que précédemment décrit, dans lequel, suite à la détection du deuxième équipement audio, le premier équipement audio établit une connexion point à point avec le deuxième équipement audio, ladite connexion point à point permettant au premier équipement audio et au deuxième équipement audio d'échanger les premières informations de connexion et les deuxièmes informations de connexion.

On propose de plus un procédé de synchronisation tel que précédemment décrit, dans lequel la connexion point à point utilise un protocole *WebSocket.*

On propose de plus un procédé de synchronisation tel que précédemment décrit, dans lequel, si le premier équipement audio et le deuxième équipement audio sont tous deux capables d'établir une connexion radio avec un unique et même point radio parmi le premier point radio ou le deuxième point radio, alors le point radio optimisé sélectionné est ledit unique et même point radio.

On propose de plus un procédé de synchronisation tel que précédemment décrit, dans lequel les premières informations de connexion comprennent un niveau de signal radio S1E1 émis par le premier point radio et reçu par le premier équipement audio, et un niveau de signal radio S2E1 émis par le deuxième point radio et reçu par le premier équipement audio, dans lequel les deuxièmes informations de connexion comprennent un niveau de signal radio S1E2 émis par le premier point radio et reçu par le deuxième équipement audio, et un niveau de signal radio S2E2 émis par le deuxième point radio et reçu par le deuxième équipement audio, et dans lequel, si
MIN (S1E1; S1E2) > MIN(S2E1; S2E2),
alors le point radio optimisé sélectionné est le premier point radio.

On propose de plus un procédé de synchronisation tel que précédemment décrit, dans lequel la détection du deuxième équipement audio comprend les étapes d'effectuer, à intervalles réguliers, une recherche sur le réseau sans fil en utilisant un protocole de découverte.

On propose de plus un procédé de synchronisation tel que précédemment décrit, le procédé de synchronisation étant mis en œuvre dans le premier équipement audio.

On propose de plus un équipement audio comprenant une interface LAN et un module de traitement dans lequel est mis en œuvre le procédé de synchronisation qui vient d'être décrit.

On propose de plus un programme d'ordinateur comprenant des instructions qui conduisent le module de traitement de l'équipement audio qui vient d'être décrit à exécuter les étapes du procédé de synchronisation tel que précédemment décrit.

On propose aussi un support d'enregistrement lisible par ordinateur, sur lequel est enregistré le programme d'ordinateur qui vient d'être décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés parmi lesquels :
[Fig. 1] la figure 1 représente une enceinte connectée dans laquelle est mis en œuvre le procédé de synchronisation selon l'invention ;
[Fig. 2] la figure 2 représente une première enceinte connectée qui est connectée au réseau sans fil via un premier point radio et une deuxième enceinte connectée qui est connectée au réseau sans fil via un deuxième point radio ;
[Fig. 3] la figure 3 est une figure similaire à la figure 2, dans laquelle une connexion point à point est établie entre la première enceinte connectée et la deuxième enceinte connectée ;
[Fig. 4] la figure 4 est une figure similaire à la figure 3, dans laquelle la première enceinte connectée a engagé une itinérance pour rejoindre le deuxième point radio ;
[Fig. 5] la figure 5 est une figure similaire à la figure 4, dans laquelle la deuxième enceinte connectée a engagé une itinérance pour rejoindre un troisième point radio ;
[Fig. 6] la figure 6 est une figure similaire à la figure 5, dans laquelle la première enceinte connectée a engagé une itinérance pour rejoindre le troisième point radio ;
[Fig. 7] la figure 7 représente des étapes du procédé de synchronisation selon l'invention, dans lequel une phase de sélection selon un premier mode de réalisation est mise en œuvre ;
[Fig. 8] la figure 8 représente des étapes du procédé de synchronisation selon l'invention, dans lequel une phase de sélection selon un deuxième mode de réalisation est mise en œuvre ;
[Fig. 9] la figure 9 représente des étapes d'une phase de sélection selon un troisième mode de réalisation.

### DESCRIPTION DETAILLEE DE L'INVENTION

On illustre ici l'invention par un exemple de mise en œuvre qui n'est bien sûr aucunement limitatif.

Un utilisateur possède des équipements connectés et, notamment, deux enceintes connectées. L'utilisateur souhaite connecter ses deux enceintes connectées à un réseau sans fil qui est mis en œuvre dans son habitation, et souhaite de plus regrouper les deux enceintes connectées au sein d'un même groupe audio pour obtenir une restitution sonore stéréo.

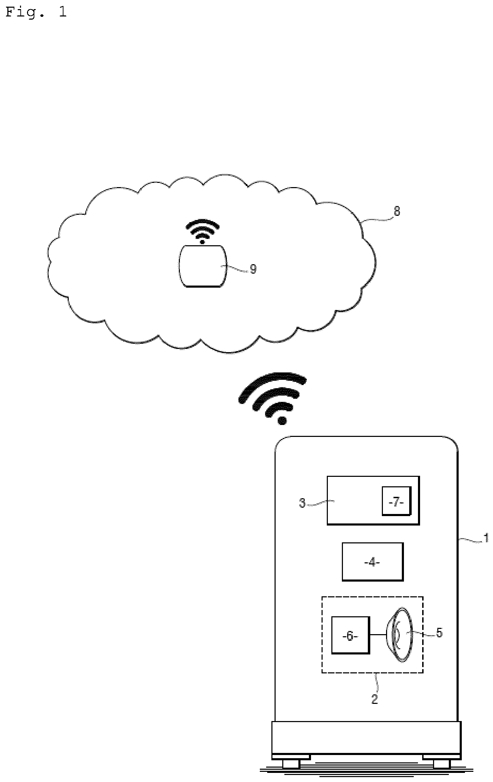

En référence à la figure 1, chaque enceinte connectée 1 comprend un module sonore 2, une interface LAN 3 et un module de traitement 4.

Le module sonore 2 comprend un ou des haut-parleurs 5 ainsi que des composants électroniques et logiciels 6 agencés pour acquérir un signal audio et transmettre le signal audio aux haut-parleurs 5 après divers traitements (qui comprennent par exemple une conversion numérique analogique) . Le module sonore 2 permet à l'enceinte connectée 1 de restituer un flux sonore sur une voie audio.

L'interface LAN 3 est ici une interface WiFi qui intègre un *driver* WiFi 7 (on peut traduire *driver* par « circuit de pilotage », ce circuit de pilotage pouvant comprendre des éléments matériels et des éléments logiciels).

Le module de traitement 4 de l'enceinte connectée 1 comporte au moins un composant de traitement qui est adapté à exécuter des instructions d'un programme pour mettre en œuvre le procédé de synchronisation selon l'invention. Le programme est stocké dans une mémoire reliée ou intégrée dans le composant de traitement. Le composant de traitement est par exemple un processeur, un DSP (pour *Digital Signal Processor*), un microcontrôleur, ou bien un circuit logique programmable tel qu'un FPGA (pour *Field Programmable Gate Arrays*) ou un ASIC (pour *Application Specific Integrated Circuit*)*.*

Un module applicatif (logiciel) est programmé dans le module de traitement 4. Le module applicatif est en charge de la gestion du réseau et dialogue avec le *driver* WiFi 7.

Le module applicatif et l'interface LAN 3 permettent donc de connecter l'enceinte connectée 1 au réseau sans fil 8 de l'habitation de l'utilisateur via un point radio 9.

Par « point radio », on entend une entité qui intègre un émetteur/récepteur radio et à laquelle des équipements peuvent se connecter pour accéder à un réseau sans fil identifié par un SSID. Dans ledit réseau sans fil identifié par ledit SSID, un point radio est identifié par un BSSID (pour « *Basic Service Set IDentifier* »).

Ainsi, un point d'accès, tel qu'une passerelle résidentielle, peut intégrer plusieurs points radio 9 (qui opèrent éventuellement à des fréquences différentes). Un répéteur WiFi peut aussi intégrer un ou plusieurs points radio 9.

L'habitation de l'utilisateur comporte en l'occurrence une passerelle résidentielle, qui comprend deux points radio 9, et une pluralité de répéteurs WiFi qui comprennent chacun un point radio 9.

Les enceintes connectées 1 sont pilotées par l'utilisateur via une application installée sur son *smartphone.*

Lors de l'installation de chacune des enceintes connectées 1, l'utilisateur renseigne le groupe audio auquel doit appartenir ladite enceinte connectée 1. Ici, les deux enceintes connectées 1 de la paire stéréo doivent appartenir au même groupe audio stéréo.

L'utilisateur renseigne aussi le SSID qui identifie le réseau sans fil 8, ainsi que le mot de passe associé audit SSID.

Le module de traitement 4 de chaque enceinte connectée 1 crée, à partir du couple comprenant le SSID et le mot de passe, un bloc réseau persistant dans le module applicatif en charge de la gestion du réseau. Par « bloc réseau », on entend un ensemble de paramètres de connexion permettant de connecter un équipement à un point radio.

Le module applicatif tentera en permanence de se connecter sur le meilleur des points radio 9 correspondant aux propriétés renseignées par l'utilisateur, et ce, tant qu'il n'y a pas création d'autres blocs réseaux plus prioritaires.

Optionnellement, le rôle de chaque enceinte connectée 1 pourra également être précisé lors de la configuration. Ici, par « rôle », on entend la restitution d'une voie audio particulière : voie de gauche ou voie de droite dans le cas de la paire stéréo.

Ces informations sont transmises aux enceintes connectées 1 par l'intermédiaire d'interfaces de programmation applicative (API).

Comme on l'a vu plus tôt, il est essentiel d'assurer que les enceintes connectées 1 du groupe audio sont bien synchronisées pour restituer le flux sonore.

Les enceintes connectées 1 utilisent ici, pour synchroniser la restitution du flux sonore, une information temporelle commune. Cette information provient de la fonction de synchronisation temporelle (TSF) et, comme on l'a vu plus tôt, est incluse dans des trames WiFi de type *Beacon,* qui sont diffusées à intervalles très réguliers par les points radio 9 (par défaut environ toutes les 100ms).

L'invention a pour but d'assurer que les enceintes connectées 1 du groupe audio utilisent des informations de fonction de synchronisation temporelle (TSF) issues d'une même source de TSF.

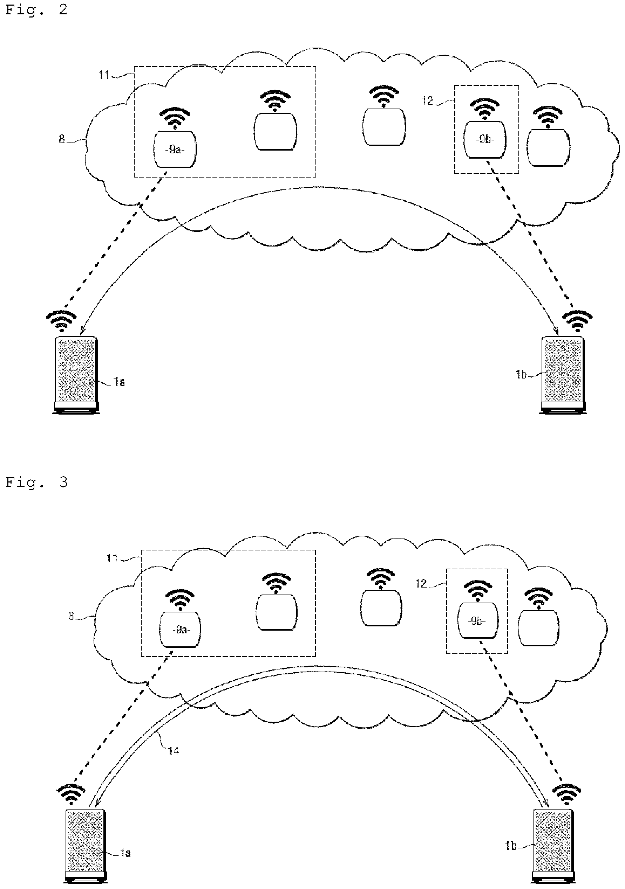

On décrit maintenant, en référence aux figures 2 à 6, la mise en œuvre du procédé de synchronisation selon l'invention dans la première enceinte connectée la. Le procédé de synchronisation est aussi mis en œuvre de la même manière dans la deuxième enceinte connectée 1b (et, plus généralement, dans tous les équipements audio d'un groupe audio, qui ne sont pas nécessairement au nombre de deux, et qui ne sont pas nécessairement des enceintes connectées).

En référence à la figure 2, l'utilisateur a donc connecté la première enceinte connectée la au réseau sans fil 8 identifié par le SSID. La première enceinte connectée la est connectée au réseau sans fil 8 via un premier point radio 9a qui est intégré dans la passerelle résidentielle 11. L'utilisateur a renseigné que la première enceinte connectée la appartient au groupe audio stéréo.

De même, la deuxième enceinte connectée 1b est connectée au réseau sans fil 8 via un deuxième point radio 9b qui est intégré dans un répéteur WiFi 12. L'utilisateur a aussi renseigné que la deuxième enceinte connectée 1b appartient au groupe audio stéréo.

La première enceinte connectée la se déclare sur le réseau sans fil 8.

Le module de traitement 4 de la première enceinte connectée la utilise le logiciel de configuration *Bonjour.* Ce logiciel utilise un protocole de découverte de type mDNS (pour *multicast Domain Name System* - RFC6762), qui communique via des messages multicast UDP (pour *User Datagram Protocol*).

La première enceinte connectée la se déclare sur le réseau sans fil 8 avec les paramètres suivants, renseignés dans un champ personnalisable (il s'agit du champ DNS-SD TXT pour le protocole *Bonjour*) : rôle, identifiant du groupe audio, premier BSSID du premier point radio 9a distant auquel est connectée la première enceinte connectée la. Les paramètres peuvent aussi comprendre un niveau de priorité, qui sera décrit plus bas.

Le premier BSSID est récupéré par le module applicatif, en charge de la gestion du réseau, auprès du *driver* WiFi 7.

La première enceinte connectée la effectue alors, à intervalles réguliers, une recherche sur le réseau sans fil 8 par le protocole de découverte afin de trouver un éventuel équipement audio appartenant au groupe audio auquel elle-même appartient.

Tant qu'un autre équipement audio du même groupe n'est pas trouvé, la recherche continue et ne s'arrête pas, et la première enceinte connectée la restitue le flux sonore de manière autonome, sans mode stéréo.

En référence à la figure 3, lorsque le module de traitement 4 de la première enceinte connectée la détecte la deuxième enceinte connectée 1b, qui est connectée au même réseau sans fil 8 et appartient au même groupe audio, la première enceinte connectée la établit possiblement (mais pas nécessairement, comme on le verra plus bas) une connexion point à point 14 avec la deuxième enceinte connectée 1b. La connexion point à point 14 est par exemple réalisée via le protocole *WebSocket.* La deuxième enceinte connectée 1b peut alors utiliser cette connexion point à point 14 pour envoyer des événements indiquant qu'elle a initié une nouvelle connexion réseau.

Cet événement est généré sur la deuxième enceinte connectée 1b par le module applicatif en charge du réseau lorsqu'il est notifié par le *driver* WiFi 7 d'une nouvelle connexion.

Le module de traitement 4 de la première enceinte connectée la acquiert alors le deuxième BSSID du deuxième point radio 9b via lequel la deuxième enceinte connectée 1b est connectée au réseau sans fil 8.

La première enceinte connectée la obtient le deuxième BSSID par exemple par l'appel d'une interface de programmation applicative sur la connexion point à point 14 qui vient d'être évoquée, ou bien dans un champ du message de notification, ou encore un champ personnalisé du protocole de découverte utilisé, etc.

Le module de traitement 4 de la première enceinte connectée la compare alors le premier BSSID et le deuxième BSSID et détermine si le premier BSSID et le deuxième BSSID sont identiques.

Si le premier BSSID et le deuxième BSSID sont identiques, la première enceinte connectée la et la deuxième enceinte connectée 1b sont assurées de partager la même source de fonction de synchronisation temporelle (TSF), car elles sont connectées au même point radio. La synchronisation stéréo est effective.

La première enceinte connectée la et la deuxième enceinte connectée 1b sont alors en permanence en écoute respective d'éventuels événements de nouvelle connexion réseau. Chaque événement d'une nouvelle connexion reçu par l'une des enceintes connectées 1 engendre une nouvelle vérification du BSSID. Si le BSSID lié à la nouvelle connexion s'avère identique, le procédé de synchronisation stéréo continue. On note que la nouvelle connexion peut correspondre à un nouvel équipement, mais aussi à l'une des enceintes connectées la ou 1b dont la connexion, pour une raison quelconque, s'avère modifiée. Cela pourrait par exemple être le cas dans un réseau WiFi *mesh* dont le système d'arbitrage aurait décidé de déplacer certains éléments.

Par contre, si le premier BSSID et le deuxième BSSID sont différents, une phase de sélection est mise en œuvre pour sélectionner un BSSID optimisé associé à un point radio optimisé. On décrira plus bas cette phase de sélection.

Le point radio optimisé sélectionné est soit le premier point radio 9a, soit le deuxième point radio 9b, soit un autre point radio.

On considère par exemple que le point radio optimisé est le deuxième point radio 9b. Le BSSID optimisé est donc le deuxième BSSID qui est différent du premier BSSID.

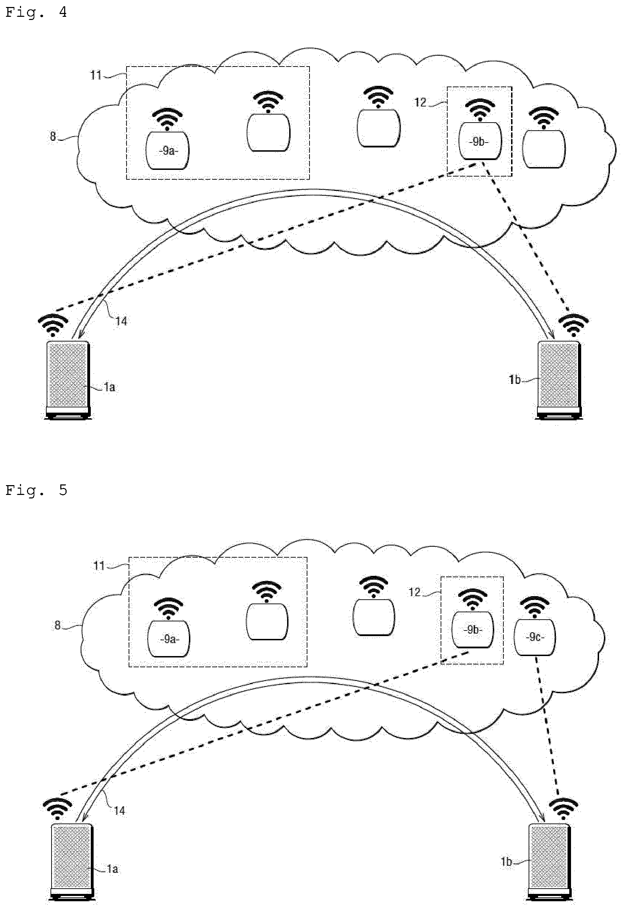

En référence à la figure 4, le module de traitement 4 de la première enceinte connectée la force alors la première enceinte connectée la à se connecter sur le point radio optimisé qui est le deuxième point radio 9b. Pour lancer l'itinérance vers le deuxième point radio 9b, un nouveau bloc réseau est créé avec une priorité plus importante que celui créé lors de la configuration de la première enceinte connectée la. Ce bloc réseau a la particularité de cibler un BSSID précis, en l'occurrence le deuxième BSSID du deuxième point radio 9b (qui est le BSSID optimisé).

Le module applicatif en charge du réseau demandera donc au *driver* WiFi 7 de lancer une itinérance vers ce BSSID précis pour exécuter ce nouveau bloc réseau.

Si l'itinérance est réussie, la première enceinte connectée la et la deuxième enceinte connectée 1b sont connectées à un même point radio ayant le même BSSID. La première enceinte connectée la et la deuxième enceinte connectée 1b partagent donc la même source de fonction de synchronisation temporelle et la synchronisation de la restitution sonore est assurée. Chaque enceinte connectée 1 acquiert les données issues de la fonction de synchronisation temporelle et en dérive une horloge interne qui est synchronisée à minima à la réception de chaque nouvelle trame *Beacon.*

La première enceinte connectée la utilise ladite fonction de synchronisation temporelle pour restituer un premier flux sonore appartenant à un flux sonore global restitué par le groupe audio. De même, la deuxième enceinte connectée 1b utilise ladite fonction de synchronisation temporelle pour restituer un deuxième flux sonore appartenant au flux sonore global restitué par le groupe audio.

Si l'itinérance échoue, le module applicatif en charge du réseau utilise les paramètres de connexion renseignés dans le bloc réseau lors de l'installation. Une erreur dédiée pourra alors être remontée à l'utilisateur et la première enceinte connectée la fonctionnera de manière autonome, sans mode stéréo.

Lorsque l'itinérance a réussi, la première enceinte connectée la et la deuxième enceinte connectée 1b sont alors à nouveau en écoute respective d'éventuels événements de nouvelle connexion réseau.

Chaque événement d'une nouvelle connexion reçu par l'une des enceintes connectées 1 engendre une nouvelle vérification du BSSID. Si le BSSID de l'équipement audio complémentaire s'avère différent, le procédé de synchronisation est à nouveau mis en œuvre.

Ainsi, sur la figure 5, la deuxième enceinte connectée 1b a détecté un troisième équipement audio (non représenté) lui-même connecté sur un troisième point radio 9c identifié par un troisième BSSID. La deuxième enceinte connectée 1b a déterminé que le BSSID optimisé est le troisième BSSID, et se connecte donc sur le troisième point radio 9c.

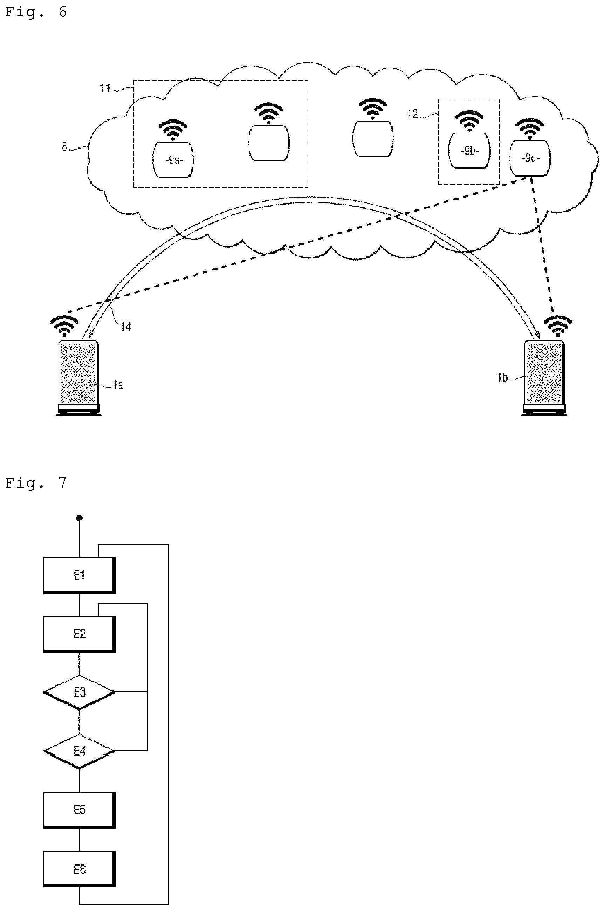

En référence à la figure 6, la première enceinte connectée la détecte à son tour le troisième équipement audio, détermine à son tour que le BSSID optimisé est le troisième BSSID, et se connecte sur le troisième point radio 9c.

On note que, comme cette invention concerne des équipements audio se situant préférentiellement dans une même pièce (pour bénéficier d'une écoute synchronisée) ou tout au moins dans une même habitation, ils pourront, dans la grande majorité des cas d'usage, s'accrocher sur un même BSSID.

On s'intéresse maintenant plus particulièrement à la phase de sélection qui permet de sélectionner le BSSID optimisé.

En référence à la figure 7, on décrit le procédé de synchronisation selon l'invention qui comprend une phase de sélection selon un premier mode de réalisation. Le procédé de synchronisation est mis en œuvre dans la première enceinte connectée la.

L'utilisateur a configuré les enceintes connectées 1 et les a connectées au réseau sans fil 8. L'utilisateur a renseigné le groupe audio auquel appartiennent les enceintes connectées 1. Il a aussi précisé le rôle de chaque enceinte connectée 1 : la première enceinte connectée la restitue la voie de gauche et la deuxième enceinte connectée 1b restitue la voie de droite.

Par ailleurs, un niveau de priorité distinct est attribué à chacune des première enceinte connectée la et deuxième enceinte connectée 1b. Les niveaux de priorité sont représentatifs des rôles remplis dans le groupe audio par la première enceinte connectée la et la deuxième enceinte connectée 1b. Ici, la restitution de la voie de gauche est associée à un niveau de priorité bas et la restitution de la voie de droite est associée à un niveau de priorité haut.

Une fois connectée au réseau sans fil 8, la première enceinte connectée la envoie un message mDNS indiquant sa présence, ainsi qu'un message « *Discovery* » demandant aux autres équipements audio de se signaler (étape E1) .

La première enceinte connectée la écoute les messages mDNS reçus du réseau sans fil 8 pour détecter l'arrivée d'autres équipements audio du groupe audio (étape E2).

La première enceinte connectée la détecte ainsi la deuxième enceinte connectée 1b qui appartient aussi au groupe audio.

Pour chaque message mDNS correspondant à un nouvel équipement audio du groupe audio, la première enceinte connectée la acquiert le BSSID du nouvel équipement audio contenu dans le message mDNS, puis le compare avec son propre BSSID. Ici, le module de traitement 4 de la première enceinte connectée la acquiert donc le deuxième BSSID du deuxième point radio 9b via lequel la deuxième enceinte connectée 1b est connectée au réseau sans fil 8, puis le compare avec le premier BSSID. Le module de traitement 4 de la première enceinte connectée la détermine alors si le premier BSSID et le deuxième BSSID sont identiques (étape E3).

Si les deux BSSID sont identiques, la première enceinte connectée la et la deuxième enceinte connectée 1b sont connectées au même point radio et peuvent être synchronisées via la fonction de synchronisation temporelle dudit point radio ; le procédé de synchronisation revient à l'étape E2. Sinon, le procédé de synchronisation passe à l'étape E4.

Ici, le premier BSSID et le deuxième BSSID ne sont pas identiques, et le procédé de synchronisation passe à l'étape E4.

La première enceinte connectée la met donc en œuvre la phase de sélection pour sélectionner un point radio optimisé qui est identifié par un BSSID optimisé. Ici, le point radio optimisé sélectionné est celui auquel est connectée la première enceinte connectée la ou la deuxième enceinte connectée 1b dont le niveau de priorité est le plus élevé.

Si le niveau de priorité de la première enceinte connectée la est supérieur à celui de la deuxième enceinte connectée 1b, le procédé de synchronisation retourne à l'étape E2 : comme son BSSID est le BSSID optimisé, la première enceinte connectée la reste connectée à son point radio actuel.

Sinon, le procédé de synchronisation passe à l'étape E5.

Ici, comme le niveau de priorité de la deuxième enceinte connectée 1b est supérieur à celui de la première enceinte connectée la, le procédé de synchronisation passe à l'étape E5.

A l'étape E5, le module de traitement 4 de la première enceinte connectée la crée un bloc réseau temporaire dans le module applicatif en charge de la gestion du réseau. Le bloc réseau temporaire comporte les mêmes paramètres de connexion que sa configuration courante, à l'exception du BSSID qui est forcé à la valeur du deuxième BSSID tel qu'obtenu dans le message mDNS. Ce bloc de configuration WiFi temporaire reçoit aussi une priorité supérieure au bloc de configuration courant.

Le module applicatif en charge du réseau demandera donc au *driver* WiFi 7 de lancer une itinérance vers ce BSSID précis pour exécuter ce nouveau bloc réseau.

A l'étape E6, la première enceinte connectée la applique donc la configuration temporaire et se reconnecte au réseau sans fil 8 en utilisant le deuxième BSSID (BSSID optimisé). Le procédé de synchronisation retourne alors à l'étape E1.

La première enceinte connectée la et la deuxième enceinte connectée 1b partagent désormais la même fonction de synchronisation temporelle. La première enceinte connectée la utilise ladite fonction de synchronisation temporelle pour restituer un premier flux sonore appartenant à un flux sonore global restitué par le groupe audio. De même, la deuxième enceinte connectée 1b utilise ladite fonction de synchronisation temporelle pour restituer un deuxième flux sonore appartenant au flux sonore global restitué par le groupe audio.

On note que la phase de sélection qui vient d'être décrite ne nécessite pas de mettre en œuvre une connexion point à point entre la première enceinte connectée la et la deuxième enceinte connectée 1b.

On a décrit ici que les niveaux de priorité sont représentatifs de rôles remplis dans le groupe audio par la première enceinte connectée la et la deuxième enceinte connectée 1b.

Les niveaux de priorité pourraient cependant être définis de manière différente, et par exemple à partir d'identifiants de la première enceinte connectée la et de la deuxième enceinte connectée 1b.

Pour chaque enceinte connectée 1, l'identifiant pris en compte est par exemple le numéro de série ou l'adresse MAC (pour *Media Access Control*) de l'enceinte connectée 1. Le niveau de priorité le plus élevé correspond par exemple à l'identifiant le plus élevé.

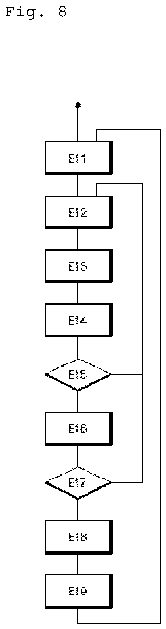

En référence à la figure 8, on décrit le procédé de synchronisation selon l'invention qui comprend une phase de sélection selon un deuxième mode de réalisation. Le procédé de synchronisation est mis en œuvre dans la première enceinte connectée la.

Une fois connectée au réseau sans fil 8, la première enceinte connectée la envoie un message mDNS indiquant sa présence, ainsi qu'un message « *Discovery* » demandant aux autres équipements audio de se signaler (étape E11).

La première enceinte connectée la écoute les messages mDNS reçus du réseau sans fil 8 pour détecter l'arrivée d'autres équipements audio du groupe audio (étape E12).

Pour chaque message mDNS correspondant à un nouvel équipement audio du groupe audio, la première enceinte connectée la établit une connexion point à point avec le nouvel équipement audio connecté, ici une connexion WebSocket (étape E13).

A l'étape E14, la première enceinte connectée la et la deuxième enceinte connectée 1b utilisent la connexion point à point pour échanger des informations de connexion. Les informations de connexion comprennent des premières informations de connexion relatives à une connexion entre la première enceinte connectée la et le premier point radio 9a et/ou le deuxième point radio 9b, et des deuxièmes informations de connexion relatives à une connexion entre la deuxième enceinte connectée 1b et le premier point radio 9a et/ou le deuxième point radio 9b.

Les premières informations de connexion sont transmises par la première enceinte connectée la à la deuxième enceinte connectée 1b via la connexion point à point 14. Les deuxièmes informations de connexion sont transmises par la deuxième enceinte connectée 1b à la première enceinte connectée la via la connexion point à point 14.

Ces informations contiennent le BSSID et peuvent contenir d'autres données de configuration telles que la bande de fréquence (2,4GHz ou 5GHz) . Ces informations peuvent aussi contenir un ou plusieurs indicateurs de qualité de la connexion.

La première enceinte connectée la acquiert donc le deuxième BSSID du deuxième point radio 9b via lequel la deuxième enceinte connectée 1b est connectée au réseau sans fil 8, puis le compare avec le premier BSSID (étape E15). La première enceinte connectée la détermine alors si le premier BSSID et le deuxième BSSID sont identiques.

Si les deux BSSID sont identiques, le procédé de synchronisation revient à l'étape E12.

Sinon, la première enceinte connectée la met en œuvre la phase de sélection pour sélectionner un point radio optimisé qui est identifié par un BSSID optimisé, et le procédé passe à l'étape E16.

A l'étape E16, la première enceinte connectée la compare les informations de sa connexion réseau avec les informations de la connexion réseau de la deuxième enceinte connectée 1b pour sélectionner le BSSID optimisé.

Par exemple, la première enceinte connectée la peut choisir un BSSID optimisé correspondant à une bande de fréquence particulière. La première enceinte connectée la peut ainsi privilégier un BSSID correspondant à la bande de fréquence 5GHz de préférence à un BSSID correspondant à la bande de fréquence 2,4GHz.

Optionnellement, la première enceinte connectée la peut mesurer la qualité avec laquelle elle reçoit le deuxième BSSID et échanger ces informations de qualité avec la deuxième enceinte connectée 1b via la connexion point à point et choisir le BSSID qui offre la meilleure qualité globale.

On suppose par exemple que la première enceinte connectée la présente une qualité de connexion égale à 90% avec le premier point radio 9a identifié par le premier BSSID (le BSSID auquel la première enceinte connectée la est actuellement connectée). La première enceinte connectée la mesure une qualité de réception avec le deuxième point radio 9b identifié par le deuxième BSSID, qui est égale par exemple à 80%. La première enceinte connectée la envoie alors ces premières informations de connexion à la deuxième enceinte connectée 1b.

De même, la deuxième enceinte connectée 1b mesure sa qualité de réception pour les deux points radio 9. Par exemple, la deuxième enceinte connectée 1b présente une qualité de connexion égale à 70% avec le premier point radio 9a identifié par le premier BSSID, et égale à 85% avec le deuxième point radio 9b identifié par le deuxième BSSID.

Par conséquent, sur le premier BSSID, la première enceinte connectée la présente une qualité de connexion égale à 90% et la deuxième enceinte connectée 1b présente une qualité de connexion égale à 70%, ce qui donne une qualité globale de 70%. Sur le deuxième BSSID, la première enceinte connectée la présente une qualité de connexion égale à 80% et la deuxième enceinte connectée 1b présente une qualité de connexion égale à 85%, ce qui donne une qualité globale de 80%.

Dans ce cas, le module de traitement 4 de la première enceinte connectée la sélectionnera le deuxième point radio 9b. On note que le module de traitement 4 de la deuxième enceinte connectée 1b sélectionnera aussi nécessairement le deuxième point radio 9b, puisque la première enceinte connectée la et la deuxième enceinte connectée 1b disposent des mêmes informations.

Le BSSID optimisé sélectionné est donc le deuxième BSSID.

Le module de traitement 4 de la première enceinte connectée la compare alors son BSSID actuel, c'est-à-dire le premier BSSID, avec le BSSID optimisé (étape E17). Si les deux BSSID sont identiques, le procédé de synchronisation retourne à l'étape E12. Sinon, le procédé de synchronisation passe à l'étape E18.

Ici, le procédé de synchronisation passe à l'étape E18.

A l'étape E18, la première enceinte connectée la lance l'itinérance vers le deuxième point radio 9b.

Le module de traitement 4 de la première enceinte connectée la crée un bloc réseau temporaire dans le module applicatif en charge de la gestion du réseau. Le bloc réseau temporaire comporte les mêmes paramètres de connexion que sa configuration courante, à l'exception du BSSID qui est forcé à la valeur du deuxième BSSID tel qu'obtenu dans le message mDNS. Ce bloc de configuration WiFi temporaire reçoit aussi une priorité supérieure au bloc de configuration courant.

Le module applicatif en charge du réseau demandera donc au *driver* WiFi 7 de lancer une itinérance vers ce BSSID précis pour exécuter ce nouveau bloc réseau.

A l'étape E19, la première enceinte connectée la applique donc la configuration temporaire et se reconnecte au réseau en utilisant le deuxième BSSID (BSSID optimisé). Le procédé de synchronisation retourne alors à l'étape E11.

Optionnellement, à l'étape E17, les enceintes connectées 1 peuvent échanger des messages pour confirmer qu'elles ont bien choisi le même BSSID optimisé, avant de passer aux étapes E11 ou E18.

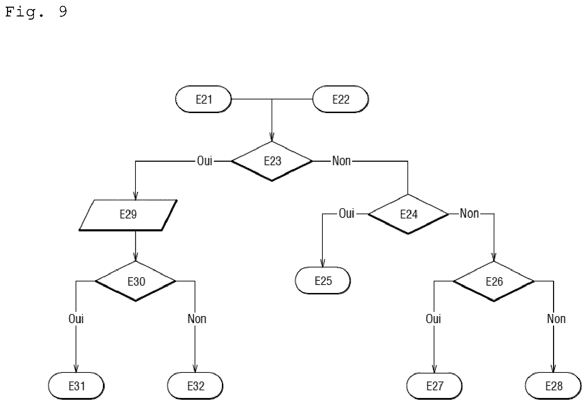

On décrit maintenant, en référence à la figure 9, une phase de sélection selon un troisième mode de réalisation.

On se replace dans la situation initiale, où la première enceinte connectée la est connectée au premier point radio 9a identifié par le premier BSSID (étape E21), et la deuxième enceinte connectée 1b est connectée au deuxième point radio 9b identifié par le deuxième BSSID (étape E22).

La phase de sélection comprend l'étape de vérifier si le premier point radio 9a et le deuxième point radio 9b sont bien tous deux visibles à la fois par la première enceinte connectée la et par la deuxième enceinte connectée 1b (étape E23) .

Si ce n'est pas le cas, et si la première enceinte connectée la et la deuxième enceinte connectée 1b sont toutes deux capables d'établir une connexion radio avec un unique et même point radio parmi le premier point radio 9a ou le deuxième point radio 9b, alors le point radio optimisé sélectionné est ledit unique et même point radio.

Ainsi, si la condition de l'étape E23 n'est pas vérifiée, la phase de sélection comprend l'étape de vérifier si le premier point radio 9a est bien visible par la première enceinte connectée la et par la deuxième enceinte connectée 1b (étape E24).

Si c'est le cas, le point radio optimisé sélectionné est le premier point radio 9a (étape E25).

Si ce n'est pas le cas, la phase de sélection comprend l'étape de vérifier si le deuxième point radio 9b est bien visible par la première enceinte connectée la et par la deuxième enceinte connectée 1b (étape E26).

Si c'est le cas, le point radio optimisé sélectionné est le deuxième point radio 9b (étape E27). Sinon, une erreur est détectée (étape E28) .

Suite à l'étape E23, si le premier point radio 9a et le deuxième point radio 9b sont bien visibles par la première enceinte connectée la et par la deuxième enceinte connectée 1b, la phase de sélection passe à l'étape E29.

Ici, les premières informations de connexion, produites par la première enceinte connectée la, comprennent un niveau de signal radio S1E1 émis par le premier point radio 9a et reçu par la première enceinte connectée la, et un niveau de signal radio S2E1 émis par le deuxième point radio 9b et reçu par la première enceinte connectée la. De même, les deuxièmes informations de connexion, produites par la deuxième enceinte connectée 1b, comprennent un niveau de signal radio S1E2 émis par le premier point radio 9a et reçu par la deuxième enceinte connectée 1b, et un niveau de signal radio S2E2 émis par le deuxième point radio 9b et reçu par la deuxième enceinte connectée 1b.

La phase de sélection comprend alors l'étape E30 consistant à vérifier si :
MIN (S1E1 ; S1E2)> MIN((S2E1; S2E2)
MIN étant la fonction « minimum ».

Si c'est le cas, le point radio optimisé est le premier point radio 9a, et le BSSID optimisé est le premier BSSID (étape E31). Sinon, le point radio optimisé est le deuxième point radio 9b, et le BSSID optimisé est le deuxième BSSID (étape E32).

Bien entendu, l'invention n'est pas limitée au mode de réalisation décrit mais englobe toute variante entrant dans le champ de l'invention telle que définie par les revendications.

L'architecture de l'enceinte connectée 1 décrite ici n'est bien sûr pas limitative. Par exemple, le module de traitement dans lequel est mise en œuvre l'invention pourrait être intégré entièrement ou partiellement avec l'interface LAN.

On a décrit ici que chaque enceinte connectée 1 utilise le protocole *Bonjour,* basé sur le mDNS, pour se déclarer sur le réseau et détecter les autres équipements audio du groupe audio. Il est possible d'utiliser d'autres protocoles. Les enceintes connectées 1 pourraient communiquer par le biais d'un serveur WAN (pour *Wide Area Network*), mais il est préférable d'utiliser un protocole LAN multicast, adapté à la découverte d'éléments locaux. Une alternative possible serait par exemple d'utiliser des messages SSDP M-SEARCH, tels qu'utilisés par UPnP.

La connexion point à point peut se faire au travers du LAN (comportant possiblement une succession de nœuds réseaux), ou bien de manière différente, par exemple au travers d'une connexion WiFi Ad Hoc.

Le procédé de synchronisation selon l'invention peut être mis en œuvre dans ou pour tout type d'équipement audio connecté, c'est-à-dire dans ou pour tout équipement susceptible de restituer un flux sonore et pouvant être connecté à un réseau : barre de son, assistant vocal, télévision, boîtier décodeur, etc.

Bien sûr, le groupe audio peut comporter un nombre d'équipements quelconque.

On a décrit ici un mode de réalisation dans lequel le procédé de synchronisation est mis en œuvre dans chaque équipement audio : la description porte principalement sur la mise en œuvre du procédé de synchronisation dans la première enceinte connectée la, mais le procédé de synchronisation est aussi mis en œuvre de la même manière dans la deuxième enceinte connectée 1b.

Ainsi, quel que soit le nombre d'équipements qui composent le groupe audio, le procédé de synchronisation peut parfaitement être mis en œuvre dans chaque équipement audio individuellement : les équipements audio se synchronisent deux par deux.

On peut cependant envisager d'autres configurations.

On peut prévoir par exemple que deux équipements audio particuliers définissent un BSSID optimisé, et que tout autre équipement audio du groupe se connecte sur ledit BSSID optimisé.

On peut aussi envisager que le procédé de synchronisation soit mis en œuvre pour tout le groupe dans un seul équipement audio, qui récupère alors toutes les informations utiles, définit le BSSID optimisé, et commande les autres équipements audio pour qu'ils se connectent audit BSSID optimisé.

De même, le procédé de synchronisation pourrait parfaitement être mis en œuvre par un équipement qui n'est pas un équipement audio, par exemple par la passerelle résidentielle ou bien par un serveur distant auquel est reliée la passerelle.

## Revendications

1. Procédé de synchronisation, mis en œuvre pour un premier équipement audio (la) connecté via un premier point radio (9a) identifié par un premier BSSID à un réseau sans fil (8) identifié par un SSID, le premier équipement audio (la) appartenant à un groupe audio, le procédé de synchronisation comprenant les étapes de :
- détecter un deuxième équipement audio (1b) connecté au même réseau sans fil (8) et appartenant au même groupe audio ;
- acquérir un deuxième BSSID d'un deuxième point radio (9b) via lequel le deuxième équipement audio (1b) est connecté au réseau sans fil (8), puis déterminer si le premier BSSID et le deuxième BSSID sont identiques ;
- si ce n'est pas le cas, mettre en œuvre une phase de sélection pour sélectionner un point radio optimisé identifié par un BSSID optimisé ;
- si le BSSID optimisé est différent du premier BSSID, connecter le premier équipement audio (la) au réseau sans fil (8) via le point radio optimisé ;
- utiliser une fonction de synchronisation temporelle fournie par le point radio optimisé pour synchroniser une restitution réalisée par le premier équipement audio d'un premier flux sonore appartenant à un flux sonore global restitué par le groupe audio.

2. Procédé de synchronisation selon la revendication 1, dans lequel un niveau de priorité distinct est attribué à chacun des premier équipement audio (la) et deuxième équipement audio (1b), et dans lequel, au cours de la phase de sélection, le point radio optimisé sélectionné est celui auquel est connecté le premier équipement audio (la) ou le deuxième équipement audio (1b) dont le niveau de priorité est le plus élevé.

3. Procédé de synchronisation selon la revendication 2, dans lequel les niveaux de priorité sont représentatifs de rôles remplis dans le groupe audio par le premier équipement audio (la) et le deuxième équipement audio (1b).

4. Procédé de synchronisation selon la revendication 3, dans lequel plusieurs voies audio sont définies dans le groupe audio, et dans lequel chaque rôle correspond à une restitution de l'une des voies audio.

5. Procédé de synchronisation selon la revendication 2, dans lequel les niveaux de priorité sont définis à partir d'identifiants du premier équipement audio (la) et du deuxième équipement audio (1b).

6. Procédé de synchronisation selon la revendication 5, dans lequel les identifiants sont des numéros de série ou des adresses MAC.

7. Procédé de synchronisation selon la revendication 1, comprenant l'étape d'échanger des premières informations de connexion relatives à une connexion entre le premier équipement audio et le premier point radio et/ou le deuxième point radio, et des deuxièmes informations de connexion relatives à une connexion entre le deuxième équipement audio et le premier point radio et/ou le deuxième point radio, la phase de sélection comprenant l'étape de sélectionner le point radio optimisé à partir des premières informations de connexion et des deuxièmes informations de connexion.

8. Procédé de synchronisation selon la revendication 7, dans lequel, suite à la détection du deuxième équipement audio (1b), le premier équipement audio (la) établit une connexion point à point (14) avec le deuxième équipement audio (1b), ladite connexion point à point permettant au premier équipement audio et au deuxième équipement audio d'échanger les premières informations de connexion et les deuxièmes informations de connexion.

9. Procédé de synchronisation selon la revendication 8, dans lequel la connexion point à point (14) utilise un protocole *WebSocket.*

10. Procédé de synchronisation selon la revendication 7, dans lequel, si le premier équipement audio (la) et le deuxième équipement audio (1b) sont tous deux capables d'établir une connexion radio avec un unique et même point radio parmi le premier point radio (9a) ou le deuxième point radio (9b), alors le point radio optimisé sélectionné est ledit unique et même point radio.

11. Procédé de synchronisation selon la revendication 7, dans lequel les premières informations de connexion comprennent un niveau de signal radio S1E1 émis par le premier point radio (9a) et reçu par le premier équipement audio (la), et un niveau de signal radio S2E1 émis par le deuxième point radio (9b) et reçu par le premier équipement audio (la), dans lequel les deuxièmes informations de connexion comprennent un niveau de signal radio S1E2 émis par le premier point radio (9a) et reçu par le deuxième équipement audio (1b), et un niveau de signal radio S2E2 émis par le deuxième point radio (9b) et reçu par le deuxième équipement audio (1b), et dans lequel, si
MIN (S1E1; S1E2) > MIN(S2E1; S2E2),
alors le point radio optimisé sélectionné est le premier point radio (9a).

12. Procédé de synchronisation selon l'une des revendications précédentes, dans lequel la détection du deuxième équipement audio (1b) comprend les étapes d'effectuer, à intervalles réguliers, une recherche sur le réseau sans fil (8) en utilisant un protocole de découverte.

13. Procédé de synchronisation selon l'une des revendications précédentes, le procédé de synchronisation étant mis en œuvre dans le premier équipement audio (la).

14. Equipement audio (1) comprenant une interface LAN (3) et un module de traitement (4) dans lequel est mis en œuvre le procédé de synchronisation selon l'une des revendications précédentes.

15. Programme d'ordinateur comprenant des instructions qui conduisent le module de traitement (4) de l'équipement audio (1) selon la revendication 14 à exécuter les étapes du procédé de synchronisation selon l'une des revendications 1 à 13.

16. Support d'enregistrement lisible par ordinateur, sur lequel est enregistré le programme d'ordinateur selon la revendication 15.
